# EUROPÄISCHE PATENTSCHRIFT

(11) **EP 1 139 474 B1**
(45) Veröffentlichungstag und Bekanntmachung des Hinweises auf die Patenterteilung: **16.05.2007**
(21) Anmeldenummer: 01105926.8
(22) Anmeldetag: 09.03.2001
(51) Int. Cl.: H01M 8/04

(54) **Verfahren zum Betrieb eines Brennstoffzellensystem**
Method for running a fuel cell system
Procédé de fonctionnement d'un système de pile à combustible

(30) Priorität: 29.03.2000 DE 10015652
(43) Veröffentlichungstag der Anmeldung: 04.10.2001
(73) Patentinhaber: NuCellSys GmbH, 73230 Kirchheim/Teck-Nabern (DE)
(72) Erfinder: Boneberg, Stefan, 72660 Beuren (DE); Schonert, Michael, 70374 Stuttgart (DE); Stark, Thomas, 73230 Kirchheim/Teck (DE)
(74) Vertreter: Finkele, Rolf

(56) Entgegenhaltungen:
- WO-A-99/31012
- US-A- 5 139 894
- PATENT ABSTRACTS OF JAPAN vol. 2000, no. 05, 14. September 2000 (2000-09-14) -& JP 2000 063103 A (HONDA MOTOR CO LTD), 29. Februar 2000 (2000-02-29) -& US 6 472 092 B1 (ISOVE SHOJI ET AL) 29. Oktober 2002 (2002-10-29)

## Beschreibung

Die Erfindung betrifft ein Verfahren zum Betrieb eines Brennstoffzellensystems nach dem Oberbegriff des Anspruches 1.

Ein solches Brennstoffzellensystem mit einem nachgeschalteten katalytischen Brenner bzw. ein Verfahren zum Betrieb desselben sind etwa aus der Patentschrift DE 197 55 116 bekannt. Dabei wird zunächst die Brennstoffzelle mit einem brennstoffhaltigen und einem sauerstoffhaltigen Medium beschickt. Als brennstoffhaltiges Medium wird dabei in der Regel eine flüssige oder gasförmige Kohlenwasserstoffverbindung verwendet. Vorzugsweise ist dies eine niedermolekulare Kohlenwasserstoffverbindung wie etwa Methanol, das sich durch Reformierung höhermolekularer Verbindungen gewinnen lässt. Als sauerstoffhaltiges Medium kann z.B. Luft eingesetzt werden.

Nach dem Durchlauf durch die Brennstoffzelle werden die Medien von der Brennstoffzelle abgeführt und zur Verbrennung einem katalytischen Brenner zugeführt. Die bei der Verbrennung gewonnene Wärme kann im Brennstoffzellensystem genutzt oder zur anderweitigen Verwendung abgeführt werden.

In der Startphase eines jeden Betriebszyklusses des Brennstoffzellensystems ergibt sich das Problem, daß der Katalysator des katalytischen Brenners noch kalt ist. Daraus resultiert eine geringe Aktivität des Katalysators, weshalb die Verbrennung gar nicht oder nur unvollständig anläuft. Dies macht sich nachteilhaft in einem erhöhten Schadstoffausstoß und einem verspäteten Ansprechen des Brenners verbunden mit einer verspäteten Wärmeabgabe bemerkbar.

Aus der Patentschrift US 5 686 196 ist ein Wasserstoffspeicher zur Speicherung von Wasserstoff bekannt, der während eines Betriebszyklusses des Brennstoffzellensystems erzeugt wird. Dieser Wasserstoff wird dem brennstoffhaltigen Medium zur Entschwefelung insbesondere in der Start- und Stopphase zugeführt.

Aus der WO99/31012 ist ein Brennstoffzellensystem bekannt, bei dem einem katalytischen Brenner während der Startphase zum Zwecke der Temperaturerhöhung zusätzlich Wasserstoff aus einem Zwischenspeicher zugeführt werden kann. Nicht offenbart wird jedoch, woher der Wasserstoff stammt.

Aufgabe der vorliegenden Erfindung ist es, das Startverhalten eines Brennstoffzellensystems, insbesondere seines katalytischen Brenners, zu verbessern und seine Emissionen zu verringern.

Diese Aufgabe wird durch ein Verfahren zum Betrieb eines Brennstoffzellensystems mit den Merkmalen des Anspruches 1 gelöst.

Durch die Zufuhrvorrichtung für die Zufuhr eines zusätzlichen wasserstoffhaltigen Mediums kann dem katalytischen Brenner beim Start eines Betriebszyklusses des Brennstoffzellensystems ein wasserstoffhaltiges Medium zugeführt werden. Dies weist eine höhere Reaktivität auf als die von der Brennstoffzelle abgeführten Medien. Hierzu sei angemerkt, daß der Start eines katalytischen Brenners herkömmlicherweise über Kohlenwasserstoffe erfolgt. Mittels der erfindungsgemäßen Zufuhr von Wasserstoff ist es möglich, einen in dem katalytischen Brenner vorgesehenen Katalysator so weit vorzuheizen, daß diese Kohlenwasserstoffe emissionsfrei umgesetzt werden können. Dadurch wird seine katalytische Verbrennung bereits bei den niedrigeren Temperaturen eingeleitet, die in dem katalytischen Brenner während der Startphase herrschen und die in der Regel der Umgebungstemperatur entsprechen. Weiterhin entstehen bei der Verbrennung des zusätzlichen wasserstoffhaltigen Mediums im noch kalten katalytischem Brenner weitaus weniger unerwünschte Emissionen, als dies bei der Verbrennung von Kohlenwasserstoffen der Fall wäre. Somit wird ein erheblicher Beitrag für den Umweltschutz geleistet.

Als Reaktionspartner für das zusätzliche wasserstoffhaltige Medium wird ein sauerstoffhaltiges Medium, vorzugsweise Luft, verwendet, das in gewohnter Weise über die Brennstoffzelle zugeführt wird. Alternativ kann das Brennstoffzellensystem auch eine separate Zufuhrvorrichtung für die Zufuhr des sauerstoffhaltigen Mediums zum katalytischen Brenner aufweisen.

Für eine günstige Gesamtenergiebilanz des Brennstoffzellensystems wird das zusätzliche wasserstoffhaltige Medium lediglich in der Startphase zugeführt.

Nachdem die Verbrennung des zusätzlichen wasserstoffhaltigen Mediums zu einer ausreichenden Erwärmung des katalytischen Brenners geführt hat, kann die weitere Aufheizung durch Zugabe eines brennstoffhaltigen Mediums, wie z.B. Methanol, erfolgen und damit schließlich zum normalen Betrieb übergegangen werden. In dieser Phase ist nur noch eine geringere Menge des zusätzlichen wasserstoffhaltigen Mediums erforderlich oder es muss überhaupt nicht mehr zugeführt werden. Deshalb ist es vorteilhaft, wenn das Brennstoffzellensystem eine Steuerungsvorrichtung aufweist, die die Zufuhrvorrichtung für das zusätzliche wasserstoffhaltige Medium steuert. So lässt sich die jeweilige Zufuhrmenge des zusätzlichen wasserstoffhaltigen Mediums den jeweiligen Gegebenheiten anpassen und bei Bedarf auch ganz abstellen. In diesem Zusammenhang sei angemerkt, daß im Normalbetrieb das Abgas der Brennstoffzellenanode (Restwasserstoff) umgesetzt wird. Gegebenenfalls ist es möglich, zusätzlichen Kohlenwasserstoff, beispielsweise Methanol, dem katalytischen Brenner zuzuführen.

Gemäß der Vorgabe den katalytischen Brenner auf eine gewünschte Temperatur zu bringen, regelt die Steuerungsvorrichtung die Zufuhrvorrichtung und damit die Zufuhr des zusätzlichen wasserstoffhaltigen Mediums in Abhängigkeit von der Temperatur des katalytischen Brenners. An diesem kann dazu ein Temperatursensor angeordnet sein. Falls eine solche Anordnung unzweckmäßig ist, ist eine Messung der Temperatur auch an anderen Stellen des Brennstoffzellensystems möglich, deren Temperatur mit der des katalytischen Brenners korreliert ist. Schließlich kann die Steuerung auch kostengünstig lediglich zeitabhängig erfolgen, wenn hinreichend bekannt ist, nach welchem Zeitraum der katalytische Brenner die gewünschte Temperatur erreicht.

Um immer einen ausreichenden Vorrat des zusätzlichen wasserstoffhaltigen Mediums zur Verfügung zu haben, weist das Brennstoffzellensystem einen Speicher für das zusätzliche wasserstoffhaltige Medium auf, der mit der Zufuhrvorrichtung kommuniziert.

Das zusätzliche wasserstoffhaltige Medium enthält z.B. Reformat oder besteht im wesentlichen aus diesem.

Alternativ oder darüber hinaus kann das zusätzliche wasserstoffhaltige Medium in einem vorausgegangenen Betriebszyklus des Brennstoffzellensystems gewonnenen Wasserstoff enthalten oder aus diesem bestehen.

Von der Zufuhrvorrichtung kann das zusätzliche wasserstoffhaltige Medium direkt zum katalytischen Brenner geleitet werden. Es kann aber auch vorteilhaft sein, in der Zufuhrvorrichtung oder zwischen der Zufuhrvorrichtung und dem katalytischem Brenner einen Flüssigkeitsabscheider anzuordnen. Dadurch kann gegebenenfalls Kondensat abgeschieden werden. Bei der Anordnung des Flüssigkeitsabscheiders zwischen Zufuhrvorrichtung und dem katalytischem Brenner lässt sich auch Kondensat abscheiden, das in dem zur Verbrennung zugeführten sauerstoffhaltigen Medium enthalten ist.

Als weitere Starthilfe kann im katalytischen Brenner lokal oder großflächig eine heiße Stelle erzeugt werden, um die Reaktion mit Wasserstoff auch bei tiefen Temperaturen sicher starten zu können. Dazu befindet sich am oder im katalytischen Brenner ein Mittel zur lokalen oder großflächigen Erhöhung der Temperatur des katalytischen Brenners. Alternativ kann auch das zusätzliche wasserstoffhaltige Medium oder das Sauerstoffhaltige Medium beheizt werden.

Das Mittel zur Erhöhung der Temperatur ist vorteilhaft als eine elektrische Heizung ausgeführt, z.B. als eine Glühkerze.

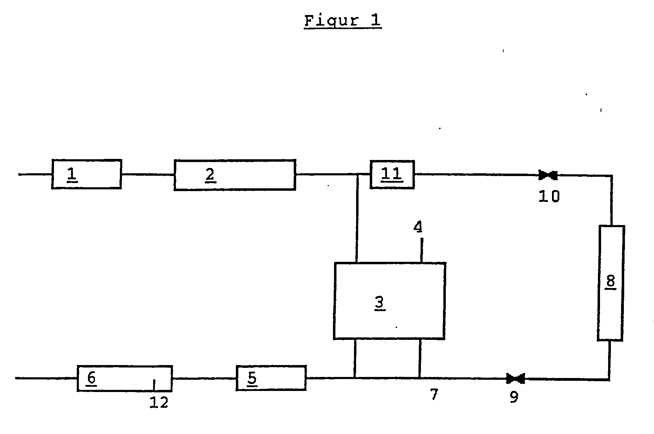

Weitere vorteilhafte und wesentliche Merkmale der Erfindung ergeben sich aus der nachfolgenden Beschreibung eines Ausführungsbeispiels anhand der Zeichnung; dabei zeigt
- Fig. 1: die schematische Darstellung eines Brennstoffzellensystems.

Das Brennstoffzellensystem weist einen Reformierungsreaktor 1 auf, der ein zur Katalysierung der Wasserdampfreformierungsreaktion geeignetes Katalysatormaterial enthält, wie etwa eine Kupfer-Zinkoxidverbindung. Dem Reformierungsreaktor kann ein nicht dargestellter Verdampfer vorgeschaltet sein, in dem mittels einer entsprechenden Dosiereinrichtung Wasser und Methanol aus entsprechenden Vorratsbehältern eingespeist werden.

Das im Reformierungsreaktor 1 erzeugte wasserstoffreiche Reformat enthält prozessbedingt einen gewissen Anteil Kohlenmonoxid und bestimmte Restkohlenwasserstoffe. Das Kohlenmonoxid sollte auf einen geringeren Anteil reduziert werden, um Verluste in der Brennstoffzellenaktivität des Brennstoffzellensystems vorzubeugen. Ebenso ist der Gehalt an bestimmten Restkohlenwasserstoffen auf ein vorgegebenes Maß zu reduzieren, die einen eher langfristigen, dafür um so schädlicheren Einfluss auf die Brennstoffzellenanordnung haben können.

Um dies zu erreichen, ist dem Reformierungsreaktor 1 eine Gasreinigungsvorrichtung 2 nachgeschaltet, in der das Kohlenmonoxid z.B. durch selektive Oxidation oder Methanisierung entfernt wird.

Von der Gasreinigungsvorrichtung 2 wird das wasserstoffreiche Reformat als brennstoffhaltiges Medium anodenseitig der Brennstoffzelle 3 zugeführt. Diese ist vorzugsweise als Brennstoffzellenstapel ausgebildet.

Weiterhin wird der Brennstoffzelle 2 kathodenseitig ein sauerstoffhaltiges Medium 4 zugeführt. Hierbei handelt es sich in der Regel um von einem Kompressor verdichtete Außenluft.

Die bei der Reaktion in der Brennstoffzelle 3 entstehenden Medien werden von der Brennstoffzelle 3 als Kathoden- bzw. Anodenabgas abgeführt, vereinigt, in einem Flüssigkeitsabscheider 5 von Kondensat befreit und schließlich einem der Brennstoffzelle nachgeschalteten katalytischen Brenner 6 zugeführt.

Wesentlich ist nun, dass das Brennstoffzellensystem eine Zufuhrvorrichtung 7 für die Zufuhr eines zusätzlichen wasserstoffhaltigen Mediums zum katalytischen Brenner 6 aufweist. Über diese ist dem Brennstoffzellensystem zwischen der Brennstoffzelle 3 und dem katalytischen Brenner 6 ein zusätzliches wasserstoffhaltiges Medium zuführbar. Im einfachsten Fall ist die Zufuhrvorrichtung 7 als Rohr oder Leitung aufgebaut, die in eine Verbindungsleitung zwischen Brennstoffzelle 3 und katalytischem Brenner 6 mündet.

Die Zufuhr des zusätzlichen wasserstoffhaltigen Mediums wird mittels einer Steuerungsvorrichtung, bestehend aus einem Ventil 9 und einer nicht abgebildeten elektronischen Steuerung, geregelt.

In der Startphase eines Betriebszyklusses wird Luft 4 über die Brennstoffzelle 3 und das zusätzliche wasserstoffhaltige Medium über die Zufuhrvorrichtung 7 dem der Brennstoffzelle 3 nachgeschaltetem katalytischen Brenner 6 zugeführt. Dies führt zu einer Temperaturerhöhung im katalytischen Brenner.

Die weitere Aufheizung des katalytischen Brenners 6 erfolgt dann in einer zweiten Phase über die Zugabe eines brennstoffhaltigen Mediums, vorzugsweise Methanol, das durch die erhöhten Temperaturen im katalytischen Brenner 6 mit geringeren Emissionen umgesetzt werden kann.

Das zusätzliche wasserstoffhaltige Medium wird einem Speicher 8 entnommen, der mit der Zufuhrvorrichtung 7 kommuniziert.

Für den Fall, das es sich bei dem zusätzlichen wasserstoffhaltigen Medium um Reformat (d. h. insbesondere während eines vorangegangenen Betriebszyklus gewonnener Wasserstoff) handelt, ist der Speicher über ein Ventil 10 direkt mit der Gasreinigungsvorrichtung 2 verbunden. Alternativ kann der Speicher auch zwischen Reformationsreaktor 1 und Gasreinigungsvorrichtung 2 an das Brennstoffzellensystem angeschlossen sein, da der katalytische Brenner 6 weniger empfindlich gegenüber Kohlenmonoxid und bestimmten Restkohlenwasserstoffen ist als die Brennstoffzelle 3.

Im Falle der Verwendung von in einem vorangegangenen Betriebszyklus gewonnenem Wasserstoff als zusätzlichen wasserstoffhaltigem Medium ist vorteilhafterweise zwischen der Gasreinigungsvorrichtung 2 und dem Speicher 8 eine Wasserstoffabsonderungsvorrichtung 11 angeordnet. Diese beinhaltet eine selektiv für Wasserstoff durchlässige Membran. Sobald das Reformat in die Wasserstoffabsonderungsvorrichtung 11 eintritt, tritt ein Teil des darin enthaltenen Wasserstoffs, begünstigt durch einen Unterdruck auf der anderen Seite der Membran, durch die Membran hindurch und wird zum Speicher 8 geführt. Dieser ist dann vorzugsweise als Metallhydridspeicher ausgeführt. Dort kann der Wasserstoff für die Startphase des nächsten Betriebszyklusses gespeichert und dann erfindungsgemäß zur Vorheizung des katalytischen Brenners 6 verwendet werden.

Zur weiteren Verbesserung des Startverhaltens kann im katalytischen Brenner ein Mittel 12 zur Erhöhung der Temperatur des katalytischen Brenners angeordnet sein, etwa in Form einer Glühkerze.

Allen Ausführungsformen der Erfindung ist die Idee gemeinsam, die Reaktivität im katalytischen Brenner zu erhöhen, wenn dieser in der Startphase noch kalt ist, und somit zu einem verbesserten Startverhalten des Brennstoffzellensystems und einer Entlastung der Umwelt beizutragen.

## Patentansprüche

1. Verfahren zum Betrieb eines Brennstoffzellensystems mit zumindest einer Brennstoffzelle (3) und zumindest einem der Brennstoffzelle (3) nachgeschaltetem katalytischem Brenner (6), wobei dem katalytischen Brenner (6) von der Brennstoffzelle (3) abgeführte Medien zugeführt werden können, und wobei dem katalytischen Brenner (6) ein zusätzliches wasserstoffhaltiges Medium zugeführt wird,
**dadurch gekennzeichnet, dass**
das zusätzliche wasserstoffhaltige Medium in einem vorangegangenen Betriebszyklus des Brennstoffzellensystems gewonnenen Wasserstoff enthält.

2. Verfahren nach Anspruch 1,
**dadurch gekennzeichnet, dass**
das zusätzliche wasserstoffhaltige Medium in der Startphase des Brennstoffzellensystems zugeführt wird.

3. Verfahren nach Anspruch 1 oder 2,
**dadurch gekennzeichnet, dass**
zwischen Zufuhrvorrichtung (7) und katalytischem Brenner (6) Flüssigkeit aus dem wasserstoffhaltigen Medium abgeschieden wird.

## Claims

1. Method for operating a fuel cell system having at least one fuel cell (3) and at least one catalytic burner (6) connected downstream of the fuel cell (3), it being possible to feed media which have been discharged from the fuel cell (3) to the catalytic burner (6), and an additional hydrogen-containing medium being fed to the catalytic burner (6), **characterized in that** the additional hydrogen-containing medium contains hydrogen obtained in a preceding operating cycle of the fuel cell system.

2. Method according to Claim 1, **characterized in that** the additional hydrogen-containing medium is fed during the start-up phase of the fuel cell system.

3. Method according to Claim 1 or 2, **characterized in that** liquid is separated from the hydrogen-containing medium between the feed device (7) and the catalytic burner (6).

## Revendications

1. Procédé d'utilisation d'un système de cellules à combustible qui présente au moins une cellule à combustible (3) et au moins un brûleur catalytique (6) raccordé en aval de la cellule à combustible (3), des fluides évacués de la cellule à combustible (3) pouvant être apportés au brûleur catalytique (6) et un fluide supplémentaire qui contient de l'hydrogène étant apporté au brûleur catalytique (6),
**caractérisé en ce que**
le fluide supplémentaire qui contient de l'hydrogène contient de l'hydrogène récupéré dans un cycle de travail précédent du système de cellules à combustible.

2. Procédé selon la revendication 1, **caractérisé en ce que** le fluide supplémentaire qui contient de l'hydrogène est apporté dans la phase de démarrage du système de cellules à combustible.

3. Procédé selon les revendications 1 ou 2, **caractérisé en ce qu'**un liquide est séparé du fluide qui contient de l'hydrogène entre le dispositif d'amenée (7) et le brûleur catalytique (6).
